# FASCICULE DE BREVET EUROPEEN

(11) **EP 0 749 546 B1**
(45) Date de publication et mention de la délivrance du brevet: **27.09.2000**
(21) Numéro de dépôt: 95911378.8
(22) Date de dépôt: 07.03.1995
(51) Int. Cl.: F16L 9/147, F16L 11/16

(54) **TUBES METALLIQUES FLEXIBLES GAINES D'UN POLYMERE RETRACTABLE**
SCHLÄUCHE AUS METALL MIT EINER ZURÜCKZIEHBAREN HÜLLE AUS POLYMER
FLEXIBLE METAL PIPES COMPRISING A SHRINKABLE POLYMER SHEATH

(30) Priorité: 10.03.1994 FR 9402765
(43) Date de publication de la demande: 27.12.1996
(73) Titulaire: Atofina, 92800 Puteaux (FR); COFLEXIP, 75116 Paris (FR)
(72) Inventeur: STRASSEL, Albert, F-69600 Oullins (FR); HARDY, Jean, F-76360 Barentin (FR)
(86) Numéro de dépôt international: FR9500260
(87) Numéro de publication internationale: WO9524579

(56) Documents cités:
- EP-A- 0 587 475
- BE-A- 377 796
- FR-A- 2 569 462
- US-A- 2 044 900
- US-A- 2 256 386
- US-A- 3 311 133
- US-A- 3 712 841

## Description

La présente invention concerne des tubes métalliques flexibles gainés d'un polymère rétractable, et plus particulièrement, des conduites tubulaires flexibles comportant un tel tube métallique flexible gainé et présentant une résistance mécanique importante, en particulier à la pression interne, qu'on peut utiliser par exemple dans la production du pétrole et du gaz off-shore.

Les tubes métalliques flexibles peuvent être obtenus de façon connue par enroulement d'un feuillard profilé et agrafé (voir par exemple FR 2 555 920) ou d'un fil de forme agrafé (voir par exemple FR 2 650 652) ou tout autre procédé conférant au tube une bonne flexibilité.

Les conduites tubulaires flexibles comportent en général un tube métallique flexible servant de carcasse interne qui est constitué par une bande métallique profilée enroulée en hélice, telle qu'un feuillard agrafé, cette carcasse en feuillard agrafé étant recouverte d'une gaine étanche en polymère, puis le tout est recouvert de couches de renfort pour résister à la pression et aux conditions du milieu marin. De tels flexibles sont décrits par exemple dans les brevets FR 2.619.193 et "Recommanded Practice for Flexible Pipe - API Recommanded Practice 17 B (RP 17 B) First Edition June 1, 1988".

Du fait de la constitution du tube métallique flexible, des interstices sont présents entre les spires permettant la flexion. L'articulation créée n'est jamais étanche aux liquides et aux gaz. C'est pourquoi une gaine d'étanchéité en polymère imperméable est mise en place par dessus le tube métallique. On peut par exemple utiliser un caoutchouc vulcanisé , ou, dans le cas des conduites flexibles à résistance mécanique élevée, un polymère thermoplastique présentant les propriétés mécaniques requises, par exemple du polyéthylène pour le transport d'eau ou de pétrole brut dégazé dans l'exploitation des gisements sous-marins.

Mais on cherche plus particulièrement à recourir à un matériau polymérique qui allie trois qualités : faible perméabilité aux liquides et/ou aux gaz, grande plage de températures d'utilisation (résistance mécanique et inertie chimique à haute température) et mise en oeuvre industrielle aisée : certains polymères semi-cristallins possèdent l'ensemble de ces qualités, les plus cristallins d'entre eux étant particulièrement intéressants pour leur faible perméabilité. Par contre, plus un polymère possède un taux de cristallinité élevé, plus il présente une contraction volumique élevée en passant de l'état fondu à l'état solide cristallisé.

Si ce retrait est empêché, comme c'est le cas dans une gaine extrudée autour d'un tube métallique, il se crée des contraintes résiduelles, en particulier de traction à l'intérieur du polymère qui rendent la gaine fragile au choc et à la flexion.

De plus, lorsque la gaine polymérique est extrudée sur le tube métallique, le polymère pénètre dans les interstices présents entre les spires, diminuant, ce faisant, le degré de liberté du flexible. En fonction des caractéristique propres à la conduite flexible et des conditions d'utilisation, la pénétration du polymère est acceptable dans de nombreux cas. Il a même été proposé de provoquer cet effet de pénétration de façon à en tirer parti pour certaines applications (FR 2 268 614). Mais, compte tenu des conditions d'utilisation les plus sévères actuellement envisagées pour les conduites flexibles à résistance élevée, il a été trouvé que la pénétration du polymère dans les interstices peut avoir des effets nuisibles sur la tenue de la gaine. En particulier, les recherches effectuées par les demanderesses ont permis d'observer des amorces de rupture pouvant se propager et entraîner la perte de l'étanchéité dans la zone et à la périphérie de la partie en relief de la gaine correspondant à la pénétration du polymère dans l'interstice.

Dans les flexibles utilisés dans l'exploitation pétrolière ou des gaz où le matériau constituant la gaine doit en outre résister au pétrole brut du gisement contenant du gaz (live crude en anglais) sans effet de cloquage (blistering) et gonflement, les tubes métalliques peuvent être gainés de polyamide-11 (PA-11), ou encore, dans les cas d'utilisation les plus sévères, de polymère fluoré et plus particulièrement de polyfluorure de vinylidène (PVDF). De par sa cristallinité, sa quasi-inertie chimique et son imperméabilité aux liquides et aux gaz, ainsi que sa résistance à une température de l'ordre de 150° C pendant de longues années, le polyfluorure de vinylidène est un matériau de choix pour le gainage des tubes métalliques flexibles. Toutefois, sa rigidité ne permet pas de l'utiliser tel quel.

Pour remédier à cet inconvénient, il est possible de plastifier le PVDF mais la pratique montre que les plastifiants migrent hors du polymère lui rendant sa rigidité d'origine après un plus ou moins long délai, dépendant également de la température des fluides circulant dans le tube.

De même, on peut utiliser du PA-11 plastifié pour réaliser une gaine polymérique d'étanchéité pour des tubes métalliques flexibles.

En alternative avec la modification d'un polymère présentant une rigidité excessive par adjonction d'un plastifiant ou par mélange, il est également connu de copolymériser une partie prédominante du monomère correspondant avec au moins un autre comonomère.

Néanmoins, les gaines polymériques réalisables selon les techniques connues ont des possibilités d'utilisation qui restent limitées par rapport aux besoins, en particulier dans le cas du transport sous pression élevée de pétrole brut agressif et/ou à haute température. D'une part, les polymères plastifiés sont affectés par l'effet de migration des plastifiants, et de plus, malgré la plastification, ils présentent des risques de fragilisation dans la zone de l'interstice lorsque les conditions d'utilisation sont sévères. D'autre part, certains polymères de performances particulièrement élevées et dont l'utilisation serait intéressante dans un état non plastifié ou relativement peu plastifié restent pratiquement exclus du fait de leur rigidité excessive.

On a maintenant trouvé qu'il suffisait de disposer un élastomère entre le tube métallique et le polymère rétractable.

La présente invention est donc un revendication 1.

L'art antérieur n'a pas résolu ce problème avec satisfaction. EP 166 385 décrit l'enroulement d'un ruban en polyester autour du flexible métallique pour éviter au PVDF de pénétrer dans les interstices. Les demanderesses ont mis en ouvre cette technique et ont constaté que se produisait un recouvrement partiel du ruban sur lui-même, pratiquement inévitable dans les conditions opérationnelles d'une fabrication industrielle, qui était suffisant pour marquer le PVDF et amorcer une rupture lors d'une flexion.

US 3771 570 décrit des flexibles métalliques formés de spires agrafées et recouvertes d'une gaine polymère (de préférence du polychlorure de vinyle (PVC)). Le problème posé était le déplacement relatif de la gaine et du tube métallique. On dispose entre les spires métalliques et le PVC une couche d'un adhésif pour faire adhérer la gaine de PVC aux spires métalliques. Le PVC pénètre complètement dans les intervalles entre les spires.

GB 373 302 décrit des conduites flexibles sans armure de renfort permettant de résister à une pression interne comprenant un tube métallique flexible formé par des spires agrafées recouvertes par une gaine étanche en caoutchouc, une couche mince relativement résistante, par exemple une feuille de cellophane, étant interposée entre les spires agrafées et le caoutchouc dans le but de protéger ce dernier de l'essence transportée par le flexible. On peut aussi, entre les spires métalliques et la feuille de cellophane, mettre un agent de remplissage. La cellophane est mise sous forme d'un ruban enroulé sur les spires ou enduite sous forme d'une solution. Puis le caoutchouc est déposé à l'extérieur et vulcanisé.

La vulcanisation a pour effet de faciliter l'adhérence et la pénétration de la feuille de cellophane qui forme un pli dans chaque interstice entre 2 spires, cet interstice correspondant à un bourrelet très marqué à la surface interne du caoutchouc. C'est exactement le contraire de la présente invention.

Dans la présente invention, on dépose autour du tube métallique flexible une quantité d'élastomère suffisante pour que le polymère rétractable ne pénètre pas ou présente une profondeur de pénétration réduite dans les interstices entre spires, l'élastomère formant ainsi autour du tube métallique flexible une couche intermédiaire qui peut envelopper le tube métallique flexible de façon continue ou discontinue.

L'élastomère pénètre en particulier dans chaque interstice entre spires partiellement ou totalement. Les travaux effectués par les demanderesses ont montré que, grâce en particulier à un choix approprié du matériau élastomérique, la contraction de la gaine polymérique qui a lieu lors de son refroidissement après extrusion a pour effet de faire pénétrer une quantité d'élastomère dans l'interstice, et de réduire sensiblement, voire même d'annuler pratiquement les contraintes résiduelles dans le polymère de la gaine d'étanchéité.

En outre, la quantité d'élastomère déjà en place dans l'interstice au moment de l'extrusion du polymère peut être choisie, en fonction des valeurs de viscosité, respectivement, de l'élastomère et du polymère de la gaine extrudée, de manière a empêcher la formation du bourrelet d'amplitude relativement importante que l'on constate dans la fabrication des conduites flexibles selon les techniques connues. Il est ainsi possible de limiter la pénétration de la gaine polymérique dans la zone où elle recouvre un interstice de sorte que sa surface intérieure forme un léger renflement de faible hauteur, et présente des valeurs de courbure limitées. En particulier, cette surface intérieure peut être pratiquement cylindrique, avec une section à peu près constante dans la longueur de la conduite flexible.

Dans un premier mode de réalisation, la couche élastomère constitue une enveloppe tubulaire recouvrant le tube métallique flexible de façon continue. Dans les zones où elle recouvre la partie médiane cylindrique des spires constituant le tube métallique flexible, elle présente une épaisseur à peu près constante, qui est de préférence entre 0,1 et 2 mm. La gaine d'étanchéité polymérique ne présente ainsi aucun point de contact avec le tube métallique flexible.

Dans un deuxième mode de réalisation, au lieu de recouvrir le tube métallique flexible de façon continue, la couche élastomérique intermédiaire est disposée dans les interstices entre spires. Selon ce mode de réalisation, la couche élastomérique se présente sous la forme d'une bande continue, plus ou moins épaisse, de section approximativement constante et présentant une configuration générale en hélice autour de l'axe de la conduite flexible correspondant à l'espace libre entre les spires adjacentes du profilé, par exemple un feuillard agrafé, qui constitue le tube métallique flexible.

Alternativement, la couche élastomérique peut comprendre deux, ou trois, ou éventuellement un plus grand nombre d'éléments hélicoïdaux telles que des bandes, dans le cas où le tube métallique flexible est constitué de deux, ou trois, ou un plus grand nombre de profilés.

Dans les 2 modes de réalisation ci-dessus, l'élastomère remplit la partie extérieure de chaque interstice sur une profondeur plus ou moins importante, définie à la revendication 1.

Par polymère rétractable, on entend tout polymère ou mélange de polymères dont le retrait linéaire au moulage (Mold Shrinkage dans Polymer Handbook) est supérieur ou égal à 0,3 %, de préférence à 1 %, et avantageusement à 3 %. Le polymère rétractable est, de préférence, un polymère semi-cristallin.

Les polymères semi-cristallins utilisables pour les besoins de l'invention sont ceux décrits dans POLYMER HANDBOOK Third Edition (édité par BRANDRUP et E.H. IMMERGUT) VI/ 1 à 89, et plus particulièrement :
- les polyoléfines,
- les polyamides,
- les polyuréthannes et polyurées,
- les polyesters,
- les polyéthers,
- les polyoxydes,
- les polysulfures (PPS) Parax,
- les polyéther-éther-cétones (PEEK) et leur copolymères,
- les polymères fluorés tels que :
   - les homo- et copolymères du fluorure de vinylidène (VF2),
   - les homo- et copolymères du trifluoroéthylène (VF₃)
   - les copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3.

Parmi les polymères fluorés, on utilise avantageusement les homo- et copolymères à base de fluorure de vinylidène à cause de leur excellente inertie chimique en présence de pétrole ou gaz brut de gisement et de leur stabilité à haute température. A titre d'exemple, notamment pour le pétrole et le gaz naturel, on a noté qu'un copolymère ayant au moins 50 % en poids de motifs fluorure de vinylidène dans l'enchaînement polymérique pouvait suffire pour l'étanchéité. Par polymère fluoré, on entend également des mélanges d'au moins 70% en poids des précédents avec d'autres polymères.

On ne sortirait pas du cadre de l'invention si ces polymères rétractables, et de préférence semi-cristallins, contenaient des plastifiants, charges, pigments, stabilisants, renforçants choc, etc.

Les polymères élastomériques utilisables comme matériaux pour réaliser la couche intermédiaire élastomérique (8) sont définis par ASTM D 883 comme des matériaux qui, à température ambiante, reviennent rapidement à leurs dimensions et formes initiales approximatives après avoir subi une déformation importante sous l'effet de l'application puis du relâchement d'une contrainte faible.

Les polymères élastomériques utilisables peuvent être non seulement des élastomères proprement dits (utilisés dans l'état vulcanisé ou réticulé), mais des thermoplastiques élastomères (couramment appelés TPE) présentant un allongement au seuil d'écoulement supérieur à 15 %. Les TPE se situent entre les résines thermoplastiques, à mise en oeuvre facile et variée, mais à propriétés limitées en température ou, dans le domaine dynamique et les élastomères aux propriétés élastiques remarquables , mais dont la mise en oeuvre est lourde, complexe et souvent polluante. La structure des TPE comporte toujours deux phases non compatibles, l'une d'entre elles rassemblant les séquences thermoplastiques dispersées dans la phase élastomère. On distingue en général 5 catégories de TPE :
- les élastomères thermoplastiques polyoléfiniques (TPO) sont des mélanges physiques réalisés à partir de polyoléfines. On distingue ceux qui contiennent plus de 60% de polypropylène et ceux dont la phase élastomère est prépondérante (plus de 70 %), celle-ci pouvant être réticulée ou non.
- les copolymères blocs à base de polystyrène dont la phase rigide est constituée de séquences polystyrène, la phase souple pouvant être par exemple formée de séquences polybutadiène (SBS), polyisoprène (SIS), ou poly(éthylène-butylène) (SEBS)
- les copolymères blocs à base de polyuréthanne (TPU) qui peuvent être obtenus par réaction conjointe d'un diol de haute masse moléculaire qui constitue la séquence souple cristallisable du TPE, sur un diisocyanate et un diol de basse masse moléculaire qui engendrent la séquence rigide.
- les copolymères blocs à base de polyester tels que ceux obtenus par copolymérisatiion d'un polybutylène (PBT) ou d'un polyéthylène téréphtalate (PET) qui constitue les séquences rigides et cristallines et d'un glycol de bas poids moléculaire (butane diol, diéthylène glycol) qui, associé à un polyalkylène éther glycol forme la séquence souple cristallisable.
- les copolymères blocs à base de polyamide dont les séquences rigides sont constituées de polyamide (PA) et les séquences souples cristallisables de polyéther, appelés ausi polyétheramides.

La raideur de l'élastomère est inférieure à la raideur du polymère rétractable : elle peut être évaluée en termes de modules de torsion et/ou flexion et/ou traction et/ou dureté Shore, ces valeurs étant mesurées dans les mêmes conditions pour l'élastomère et le polymère rétractable. On préfère que la raideur de l'élastomère reste inférieure à celle du polymère rétractable quelles que soient les conditions d'utilisation, notamment de température, et compte tenu du vieillissement des matériaux.

A titre préférentiel, l'élastomère présente une dureté shore A à 23° C inférieure à 92 (et avantageusement inférieuré à 70) ou shore D inférieure à 50 mesurées selon la norme ISO 868.

De préférence, l'élastomère présente un module de torsion à 23° C inférieur à 100 N/mm², avantageusement inférieur à 30 N/mm², et de façon particullièrement préférée, inférieur à 10 N/mm² (mesuré suivant DIN 53447).

De préférence, l'élastomère présente un module de traction à 23° C inférieur à 400 MPa, et avantageusement inférieur à 100 MPa (mesuré suivant ISO 527).

De préférence, l'élastomère présente un allongement à la rupture à 23° C supérieur à 50%.

Dans le cas des TPE, on utilise de préférence un matériau qui a un point VICAT inférieur à 70° C quand il est mesuré par méthode A/50 de la norme ISO 306.

On utilise avantageusement des élastomères qui vérifient simultanément ces propriétés de dureté, de point VICAT, de module de torsion et d'allongement énoncées ci-dessus.

On préfère que le module de torsion de l'élastomère reste inférieur à 30 N/mm² (mesuré suivant DIN 53447) au cours du vieillissement thermique.

Les élastomères et/ou TPE particulièrement recommandés dans le cadre de l'invention peuvent être choisis parmi les copolymères EPDM, les copolymères acrylonitrile - butadiène - styrène, les copolymères méthylméthacrylate - butadiène - styrène, les copolymères ester-amide et éther-amide, les copolymères éthylène - oxyde de carbone, les terpolymères éthylène - oxyde de carbone - vinyle acétate, les caoutchoucs acryliques, les copolyéthers - esters thermoplastiques, les copolymères séquencés à base de polystyrène et d'élastomère du type polyisoprène, le polybutadiène etc... les copolymères styrène -butadiène - styrène, les copolymères éthylène - éthylacrylate, éthylène - éthylacétate et éthylène - vinyle acétate ainsi que leurs terpolymères, les élastomères fluorés, les élastomères de silicone, les élastomères silicone fluorés, les polyuréthannes.

Dans le cadre de l'invention, on peut également utiliser des mélanges d'élastomères et/ou de TPE.

Pour les besoins de l'invention, on peut utiliser un élastomère thermoplastique polyuréthanne (TPU) de dureté shore A inférieure à 92 mesurée selon la norme ISO 868. En outre, on préfère que cet élastomère subisse une forte diminution de viscosité en cours de vieillissement thermique. Cette diminution de viscosité est de préférence d'au moins 60 % après 30 jours à 120° C. L'élastomère thermoplastique polyuréthanne possède habituellement une viscosité à 20° C comprise dans les limites définies ci-dessous. Les valeurs tiennent compte de la correction de RABINOWVITCH appliquée aux liquides non newtoniens.

| **Vitesse de cisaillement corrigée s-1** | **Viscosité en kPa.s** | |
|---|---|---|
| 4,09 | 0,7 | 1,3 |
| 13,64 | 0,25 | 0,85 |
| 36,15 | 0,19 | 0,78 |
| 122,91 | 0,12 | 0,70 |

La vitesse de cisaillement est également le gradient de vitesse de déformation au cisaillement.

D'une façon générale, l'élastomère doit présenter de préférence un bon niveau d'inertie chimique et de stabilité à température élevée, en particulier dans le cas des conduites transportant du pétrole brut de gisement, qui comporte divers composants couramment très agressifs vis-à-vis d'un grand nombre de matériaux plastiques. En particulier, dans le cas du pétrole brut de gisement qui comporte en général des teneurs en eau plus ou moins importantes, l'élastomère sera de préférence choisi de manière à ne pas être affecté par les effets d'hydrolyse à la température relativement élevée du brut sortant du puits, ou à ne pas être autrement dégradable en présence d'eau.

En outre, en fonction, d'une part, du polymère rétractable choisi pour constituer la gaine d'étanchéité et, d'autre part, des conditions d'exploitation de la conduite, en particulier température et fluides transportés, l'élastomère sera de préférence choisi de manière à ce que ses éventuels produits de dégradation ne risquent pas d'affecter, en traversant progressivement la gaine d'étanchéité, les caractéristiques du polymère rétractable.

Un exemple intéressant d'élastomères présentant les propriétés souhaitées de stabilité et d'inertie chimique est constitué par le groupe des silicones, en particulier les silicones élastomères RTV (vulcanisables à température ambiante) ou HCR (vulcanisables à chaud). Dans le cas de silicones HCR mais également dans le cas de silicones RTV, la vulcanisation peut être réalisée en continu afin d'accélérer l'opération, en faisant défiler la conduite flexible à travers ou devant des moyens de chauffage (tel que chauffage par air chaud, par radiation , etc).

L'élastomère est choisi et appliqué de telle sorte que son interposition empêche la pénétration du polymère de la gaine dans les dépressions présentes entre les spires ; ainsi par fluage à chaud lors de l'extrusion de la gaine d'étanchéité polymérique et sous l'effet de la contrainte appliquée par la gaine au cours de son retrait, il pénètre dans les espaces ouverts de la surface extérieure du tube métallique flexible correspondant aux interstices entre spires de façon à ce que le polymère de la gaine soit libre de se resserrer autour du tube métallique sans qu'il ne se crée dans sa masse de tensions internes.

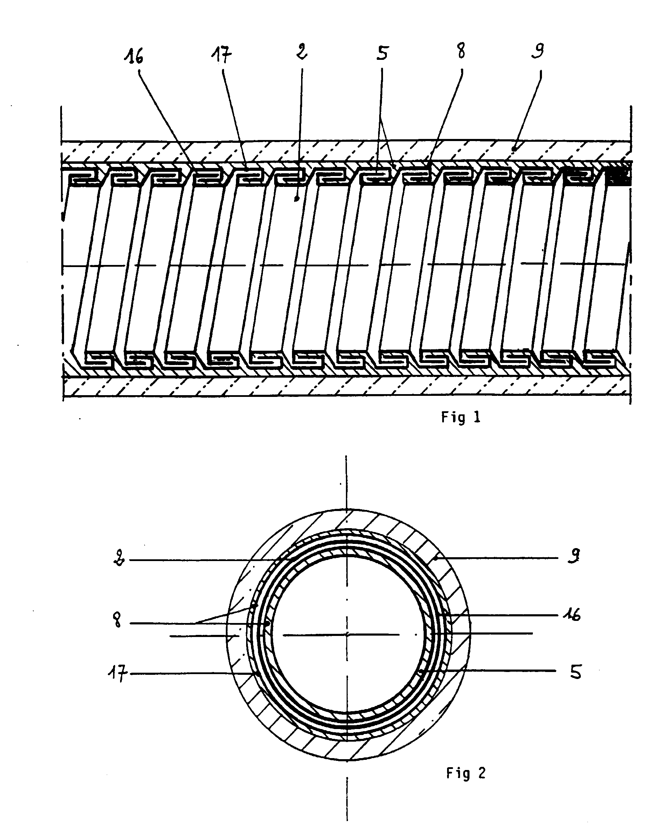

Les figures 1 et 2 annexées schématisent les coupes d'une conduite tubulaire flexible selon le premier mode de réalisation de l'invention. Les emboîtements des articulations (16,17) du tube métallique flexible (2) créent des interstices et des espaces (5) entre les spires métalliques. La couche (8) d'élastomère recouvre le tube métallique, tout en remplissant les espaces entre les spires métalliques. Cette couche d'élastomère sert d'intermédiaire entre le tube métallique flexible et la couche externe de polymère rétractable (9).

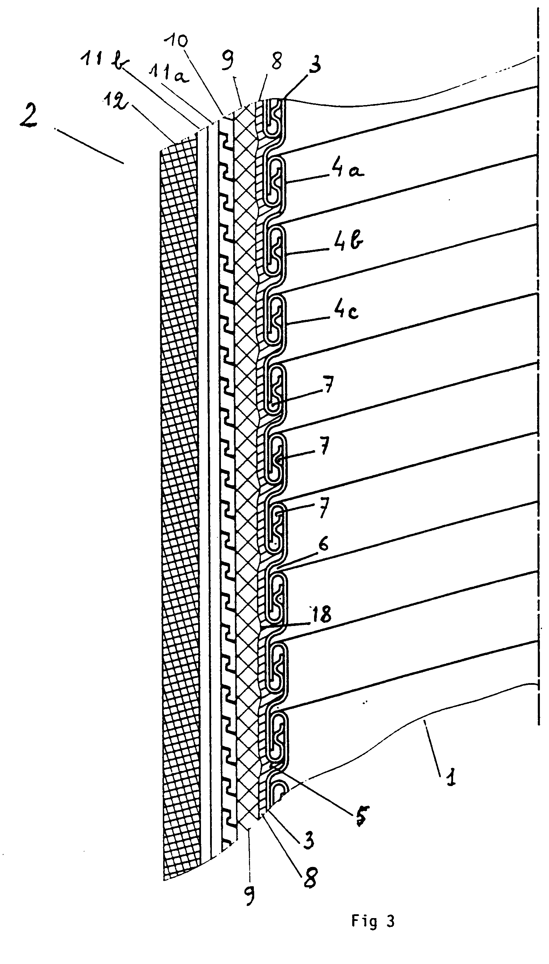

La figure 3 annexée schématise une coupe d'une conduite tubulaire flexible également selon le premier mode de réalisation de l'invention plus particulièrement destinée au transport d'eau, de pétrole ou de gaz dans l'exploitation offshore. Le tube métallique flexible (1) constituant la carcasse interne de la conduite tubulaire flexible (2) est réalisé par enroulement hélicoïdal à faible pas d'un feuillard agrafé (3) dont les spires successives (4a, 4b, 4c,...) délimitent un espace interstitiel (5) ouvert vers l'extérieur, de configuration générale hélicoïdale, ainsi que des interstices internes (6) ouverts vers l'intérieur de la conduite et des espaces internes (7) plus ou moins fermés. La couche (8) d'élastomère recouvre de façon continue le tube métallique flexible, tout en remplissant les interstices (5) entre les spires. Cette couche d'élastomère sert d'intermédiaire entre le tube métallique flexible et la couche de polymère rétractable (9) qui constitue la gaine d'étanchéité interne de la conduite flexible. Les nappes d'armure de renforcement disposées à l'extérieur de la gaine d'étanchéité assurent la résistance mécanique de la conduite flexible, et en particulier la résistance à la pression interne régnant dans le flexible transporté, l'effet de la pression interne étant intégralement transmis aux armures à travers la gaine d'étanchéité. Le matériau plastique de la gaine d'étanchéité est ainsi soumis à des conditions de travail tout à fait particulières, avec un champ de contrainte de compression pratiquement uniforme dont la valeur extrêmement élevée, pouvant atteindre ou dépasser 100 MPa, correspond à la pression interne, et avec des déformations et des contraintes de cisaillement très faibles.

Dans le cas de l'exemple illustré, la résistance à la pression circonférentielle (Hoop stress) est essentiellement assurée par la nappe d'armure (10) dite voûte de pression constituée par l'enroulement à faible pas d'un fil ou profilé, de préférence du type fil de forme agrafé tel qu'un fil Zeta, les composantes axiales des efforts étant reprises par la paire d'armures (11a, 11b) constituée par une pluralité de fils enroulés avec des angles, de 30° ou 40° par exemple, en sens respectivement opposés. Alternativement, la résistance à la pression interne peut être assurée par une simple paire de nappes d'armures dont les fils sont enroulés en sens opposés selon un angle d'environ 55°. Les fils des nappes d'armures (10, 11) sont, typiquement, en métal, par exemple en acier ou en aluminium, ou en plastique de préférence renforcé par des fibres, ou encore en fibres de haute résistance.

La conduite tubulaire flexible est protégée par une gaine extérieure (12) réalisée de préférence en polymère thermoplastique par extrusion.

Le rôle du tube métallique flexible (1) est d'assurer la résistance de la conduite flexible à l'écrasement, ainsi que d'empêcher l'affaissement par l'intérieur (collapse) de la gaine d'étanchéité dans certaines circonstances d'exploitation.

Par comparaison avec les conduites flexibles dont les éléments de structure sont intégralement liés (bonded flexible pipe), la conduite flexible (2) est du type comportant des éléments de structures séparés, non liés (unbonded flexible pipe), et qui constitue un cas d'application particulièrement intéressant de cette invention.

Dans le cas de l'exemple selon Fig. 3, la couche élastomérique (8) constitue une enveloppe tubulaire continue autour du tube métallique flexible (1), et sa surface extérieure, en contact avec la surface intérieure de la gaine d'étanchéité (9), est approximativement cylindrique, présentant une dépression (18) de profondeur faible à l'endroit des interstices (5). L'élastomère de la couche (8) remplit les interstices (5) de façon pratiquement complète. Alternativement, en fonction, en particulier, de la viscosité et de la quantité d'élastomère et de la procédure de fabrication il serait possible, selon un mode de réalisation non illustré, de réaliser la couche intermédiaire (8) avec une pénétration réduite dans les interstices (5) correspondant à la cote a illustrée dans les Figures 3A et 3B.

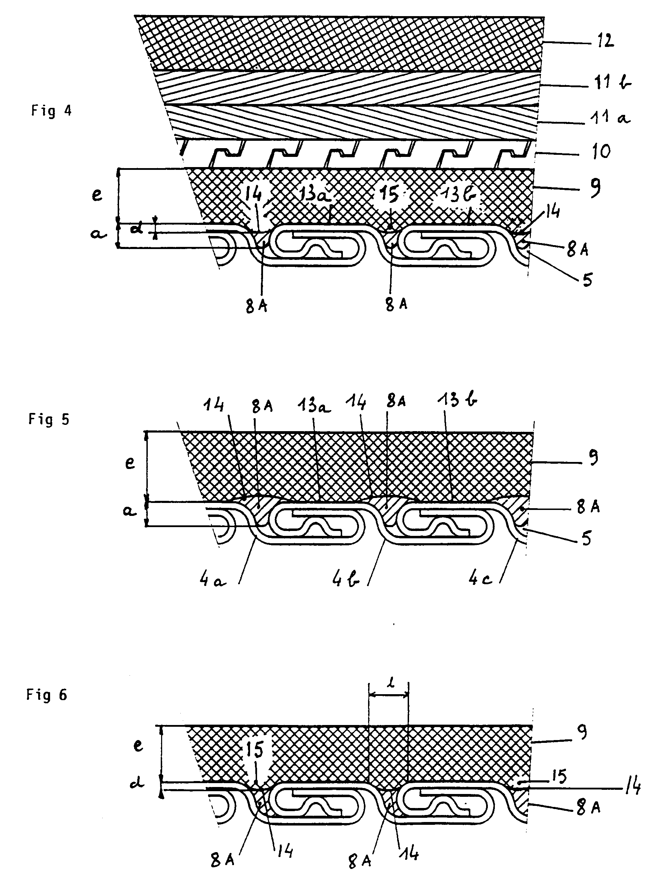

Les Figures 4 à 6 illustrent en coupe longitudinale partielle agrandie une conduite flexible selon un deuxième mode de réalisation, comportant une couche intermédiaire élastomère (8) constituée par une bande d'élastomère (8A) disposée dans l'espace interstitiel (5) qui sépare les parties cylindriques extérieures (13a, 13b, 13c...) des spires successives constituant le tube métallique flexible (1). La succession alternée des parties cylindriques extérieures (13) du tube métallique et des surfaces extérieures (14) de la bande d'élastomère (8A) constitue une surface de forme approximativement cylindrique sur laquelle la gaine d'étanchéité polymérique (9) prend appui de façon continue.

Dans le cas où le tube métallique flexible est constitué par l'enroulement hélicoïdal continu d'un seul profilé, tel qu'un feuillard agrafé (3), la couche élastomère (2) comprend une seule bande continue (8A). Alternativement, le tube flexible métallique peut comporter un ou plusieurs profilés enroulés parallèlement, la couche élastomère (2) comportant un nombre de bandes (8A, 8B,...) égal au nombre de profilés (3A, 3B,...) du tube métallique flexible.

La Figure 4 qui illustre une variante du deuxième mode de réalisation montre également l'armure de la conduite flexible, qui comporte, dans le cas présent, une voûte de pression (10) et deux nappes (11a, 11b) d'armure de traction, ainsi que la gaine extérieure (12).

Dans le cas des variantes selon Figures 4 et 5, l'élastomère pénètre partiellement dans les interstices (5), l'extrémité intérieure de la zone occupée par l'élastomère se trouvant à une distance radiale a par rapport à la surface cylindrique définie par les parties cylindriques extérieures (13) du tube métallique flexible. La variante selon Figure 6 comporte une couche intermédiaire constituée par une bande d'élastomère pénétrant de façon approximativement complète dans les interstices (5).

Par rapport à la configuration idéale qui serait une surface parfaitement cylindrique dans le prolongement des parties cylindriques (13) du feuillard agrafé, la surface extérieure (14) de l'élastomère peut présenter une irrégularité telle qu'une dépression ou une forme bombée de faible amplitude.

L'irrégularité présentée par la surface extérieure (14) peut, de préférence, être en forme de cuvette, à la façon d'un ménisque de concavité orientée vers l'extérieur ainsi qu'illustré par les Figures 4 et 6. Dans ce cas, la gaine d'étanchéité polymérique (9) comporte sur sa face interne un léger renflement (15) dont l'épaisseur d dans le sens radial, par rapport à la surface cylindrique de référence définie par les surfaces cylindriques (13) du feuillard agrafé, est de préférence inférieure ou égale à 0,3 e, e étant l'épaisseur de la gaine (9) dans sa partie cylindrique autour des surfaces (13).

Alternativement, la bande élastomérique (8A) peut présenter une forme légèrement bombée vers l'extérieur (Fig 5). Sa surface extérieure (14) présente une partie centrale cylindrique qui est raccordée avec la surface extérieure du feuillard agrafé (3) de façon progressive avec une courbure très faible et qui peut se trouver légèrement écartée par rapport à ladite surface cylindrique de référence, la distance radiale séparant les 2 surfaces étant de préférence inférieure à 0,2 e.

D'une façon générale, et quel que soit le mode de réalisation choisi, et en particulier dans le cas des exemples illustrés par les Figures 1 à 6, on obtient de bons résultats si la courbure de la surface intérieure de la gaine d'étanchéité polymérique (9) reste limitée à de très faibles valeurs dans les zones, voisines des interstices (5), où elle peut présenter de légères irrégularités. De préférence, le rayon de courbure le plus faible que peut présenter cette surface intérieure est supérieur à 0,5 e, et, avantageusement, à la valeur e de l'épaisseur de la gaine (9), des valeurs de ce rayon de courbure au moins égales à 2e permettant d'exploiter au maximum les propriétés intrinsèques du matériau.

L'épaisseur de la gaine de polymère rétractable (9) peut on général varier entre 1 à 30 mm, et de façon courante entre 3 et 15 mm, on fonction notamment du diamètre de la conduite tubulaire flexible.

La largeur l que présente l'interstice (5) au niveau de son ouverture extérieure, c'est-à-dire sa largeur entre les parties cylindriques (13) des spires adjacntes, peut varier entre 2 et 40 mm. Les bords du profilé agrafé, par exemple un feilllard agrafé (3), qui encadrent l'interstice (5) étant de préférence arrondis, la largeur de l'interstice diminue de l'extérieur vers l'intérieur. Si elle est mesurée à un niveau correspondant à la moitié de la profondeur radiale h du volume intersticiel, la largeur de l'interstice peut être de l'ordre de 1 à 15 mm. Dans la pratique, la profondeur h de l'interstice peut varier entre 1,5 et 30 mm, le rappport h/l de la profondeur h à la largeur extérieure l pouvant donc varier entre 0,4 et 1,4.

La fabrication on grandes longueurs continues de la conduite flexible selon l'invention peut se faire on réalisant la gaine polymérique (9) par extrusion de façon connue. Dans le cas où la couche élastomère (8) constitue une enveloppe tubulaire continue autour du tube métallique flexible, l'élastomère peut être mis en place par extrusion autour du tube métallique flexible. Dans ce cas, il est possible par exemple de coextruder simultanément le polymère rétractable et l'élastomère au moyen de deux extrudeuses et d'une boîte de répartition des flux on tête d'équerre recevant en son centre le tube flexible métallique à gainer. La pénétration de l'élastomère dans les interstices (5) entre spires du tube métallique flexible est alors conditionnée, en particulier dans un premier temps, par la viscosité que présente l'élastomère thermoplastique à l'état fondu. Il est également possible de gainer classiquement par extrusion-gainage le tube flexible métallique avec l'élastomère, puis ensuite, de revêtir l'ensemble d'une couche de polymère rétractable dans une seconde opération d'extrusion pratiquée en ligne à une certaine distance on aval sur le tube flexible garni d'élastomère sortant de la première extrudeuse (extrusion tandem), ou dans une opération d'extrusion réalisée séparément après achèvement de la première extrusion, ou encore de gainer le tube flexible métallique avec l'élastomère, éventuellement dissous dans un solvant puis, après une éventuelle réticulation et/ou évaporation du solvant, dans un deuxième temps, de revêtir l'ensemble d'une couche de polymère rétractable par une extrusion-gainage.

Alternativement, la couche intermédiaire d'élastomère peut être réalisée soit sous forme de couche tubulaire continue telle qu'illustrée en Fig. 3, soit sous forme de bande (8A) disposée dans les interstices (5) telle qu'illustrée on Fig. 4 à 6 par enduction, ou par pulvérisation, par exemple d'aérosol, ou par projection notamment électrostatique, ou par passage dans un bain liquide, par exemple par dissolution de l'élastomère dans un solvant, ou dans un bain fluidisé, ou tout autre procédé connu permettant d'effectuer le revêtement de la surface et/ou des interstices superficiels du tube métallique flexible par l'élastomère. Dans le cas des élastomères vulcanisables, l'élastomère peut ainsi successivement être appliqué sur le tube métallique à l'état cru, puis être vulcanisé, de préférence avant extrusion de la gaine d'étanchéité (9). De façon avantageuse, l'élastomère peut être mis on place on faisant passer de façon continue le tube flexible métallique à travers une enceinte remplie d'élastomère à l'état cru, le tube métallique flexible (1) entrant dans et sortant de l'enceinte par des orifices circulaires qui peuvent être équipés d'un joint par exemple on caoutchouc, le diamètre du joint étant calibré de manière à se resserrer sur le tube (1), ou, à laisser un certain espace libre, de sorte que la couche intermédiaire on élastomère puisse être réalisée sous forme d'une bande (8A) disposée dans les interstices, ou d'une enveloppe tubulaire continue.

Selon un autre procédé de mise en oeuvre, l'élastomère peut être mis en place, par rubanage, par enroulement hélicoïdal d'un jonc ou d'une bande continue, l'élastomère étant soit à l'état vulcanisé, soit thermoplastique. On peut ainsi utiliser un jonc circulaire, le matériau étant suffisamment mou pour être déformé on prenant la configuration souhaitée de la bande élastomère (8A). Avantageusement, on peut utiliser un jonc de forme on élastomère dont la section est réalisée de façon à correspondre à la configuration des parties du profilé agrafé (3) constituant les flancs délimitant radialement, de chaque côté, l'interstice (5). Un tel jonc de forme, de section correspondant au profil de l'interstice, peut ainsi, par exemple, constituer le ruban (8A) illustré en Figure 3.

On ne sort pas du cadre de l'invention en réalisant une couche intermédiaire élastomérique (8) sous forme d'enveloppe tubulaire continue en enroulant hélicoïdalement à bords jointifs une bande en élastomère, l'élastomère étant suffisamment mou pour se déformer facilement, en particulier sous l'effet de l'extrusion de la gaine d'étanchéité (9) de manière à présenter une surface extérieure régulière à peu près lisse sans chevauchement ni séparation des spires adjacentes. La bande peut comporter, sur sa face intérieure, une partie médiane en relief formant bourrelet de section adaptée au profil de l'interstice (5) de manière à assurer le remplissage de l'interstice sur une certaine profondeur correspondant à la cote a des Fig. 4 et 5.

Une variante de l'invention non illustrée consiste à interposer une nappe de faible épaisseur contituée par l'enroulement en une ou plusieurs couches d'une bande, par exemple de tissu, de fibres, de matière plastique, éventuellement renforcée par des fibres, entre le tube métallique flexible (1) et la couche intermédiaire d'élastomère (8).L'enroulement de la bande peut se faire par recouvrement, pour faciliter la réalisation industrielle d'une nappe de caractéristiques régulières : le matériau élastomérique en appui sur la bande n'est pas en contact avec la surface du tube flexible et n'est donc pas affecté et/ou dégradé par les irrégularités de surface créees par le recouvrement. On préfère utiliser une bande qui présente une résistance mécanique suffisante de façon à ce que la nappe permette de faciliter le remplissage partiel et régulier de l'interstice (5) par l'élastomère de la couche intermédiaire.

Dans le cadre de l'invention et dans le but de renforcer l'adhésion élastomère/polymère rétractable, on peut ajouter une certaine quantité de polymère rétractable à la couche intermédiaire élastomère et/ou ajouter une certaine quantité d'élastomère au polymère rétractable avant de les extruder par exemple selon l'une ou l'autre des techniques énoncées ci-dessus. On peut également interposer, entre la couche intermédiaire d'élastomère et la gaine de polymère rétractable, une couche qui serait constituée d'un mélange d'élastomère et de polymère rétractable : cela reviendrait par exemple à co-extruder une gaine tricouche élastomère/élastomère+polymère rétractable/polymère rétractable.

L'épaisseur de la couche intermédiaire d'élastomère ou de TPE peut en général varier entre 0,1 à 2 mm mesurée à partir du sommet de la conduite flexible.

L'épaisseur de la gaine de polymère rétractable (9) peut en général varier entre 1 à 30 mm, et de façon courante entre 3 et 15 mm, en fonction notamment du diamètre de la conduite tubulaire flexible.

La conduite tubulaire flexible, objet de l'invention, est particulièrement adaptée pour l'exploitation pétrolière et des gaz dont le tube métallique flexible peut posséder un diamètre interne de l'ordre de 20 à 600 mm, et de façon courante de 50 à 400 mm, la pression interne de la conduite étant couramment supérieure à 100 bar, et pouvant atteindre ou dépasser, selon le diamètre, 500 ou même 1 000 bar. De telles conduites flexibles sont particulièrement bien adaptées aux températures élevées, pouvant atteindre ou dépasser, en fonction des polymères utilisés, des valeurs de l'ordre de 100 à 120° C qui correspondent aux limites actuellement possibles.

Les exemples suivants illustrent l'invention sans toutefois la limiter.

Autour d'une tube flexible d'acier de 32 mm de diamètre constitué de spires entre lesquelles se trouvent des creux et des interstices permettant son articulation, on applique une couche d'élastomère (8) constituant une enveloppe tubulaire continue autour du tube métallique par la méthode indiquée dans chacun des tableaux correspondant à chacun des exemples et une couche de polymère semi-cristallin par extrusion ou coextrusion tel que le précise les tableaux.

A titre comparatif, on réalise dans les mêmes conditions le même tube avec la même gaine de polymère semi-cristallin mais sans la couche intermédiaire d'élastomère.

On teste ces tubes de la façon suivante :

Le tube gainé est placé sur deux supports fixes. Au moyen d'un galet de cintrage de 75 mm de rayon, on appuie à équidistance des points d'appui du tube.

On exerce une pression de 50 bars. Le tube se cintre autour du galet. La hauteur d'enfoncement du galet indique l'aptitude à la déformation du tube flexible.

Dans tous les exemples, les duretés Shore A et D sont mesurées selon la norme ISO 868.

### Exemple 1

Dans tous les essais, le polymère semi-cristallin est du polypropylène (PP) de Melt Index = 3 g/10 min mesuré selon ISO 1133, de 5 mm d'épaisseur. (APPRYL ® 3030 FN1 de la Sté APPRYL).

L'élastomère est :
* Polyuréthanne polyéther (UTAFLEX ® TB 1 de la Société UETTWILLER) - Dureté shore A = 50 après réticulation.
** Copolymère à blocs polyamides et blocs polyéther reliés par des fonctions ester,
PEBAX ® 2355 ELF ATOCHEM - Dureté shore A = 75 - Module de flexion à 23° C = 15 MPa mesuré selon la norme ISO 178.
*** Polymère VF₂ - C₂F₃Cl en proportion molaire 50/50, présente un module de flexion à 23° C de 250 MPa mesuré selon la norme ISO 178.

| **Température de l'essai : 0° C** | | |
|---|---|---|
| **Couche d'élastomère** | **Mode d'application** | **Epaisseur mesurée à partir du sommet des spires** |
| Polyuréthanne * 2 composants | Par enduction suivie d'un recuit pendant 1 heure à 80°C | 0,5 mm |
| Polyéther-esteramide ** | Extrusion de l'élastomère sur le tube suivie de l'extrusion du PP | 1 mm |
| Polymère *** VF₂ - C₂F₃Cl | Coextrusion directe PP-polymère sur le tube d'acier | 1 mm |

Les résultats du test décrit plus haut montrent une meilleure aptitude à la déformation, et en particulier une amélioration à la flexion, des tubes flexibles gainés d'une couche intermédiaire d'élatomère interposée entre la carcasse proprement dite du flexible d'acier et la gaine externe de polymère rétractable (selon l'invention).

### Exemple 2

Dans tous les cas, l'élastomère est un polyester-polyuréthanne de dureté Shore A = 88 (ESTANE ® 58271), l'épaisseur de la couche d'élastomère mesurée à partir du sommet des spires est de 1,5 mm.

| **Température de l'essai : 0° C** | | |
|---|---|---|
| **Polymère semi-cristallin constituant la gaine d'étanchéité** | **Mode d'application** | **Epaisseur** |
| Polyéthylène (Mn ∼ 10⁵) | Par extrusion sur le tube revêtu de l'élastomèrepar extrusion | 5 mm |
| Polyamide-11 * (RILSAN ®BESNO TL) | Coextrusion sur le tube métallique | 4 mm |
| Copolymère éthylène/TFE ** (TEFZEL® 200 de DUPONT) | Extrusion sur le tube métallique revêtu de l'élastomère par extrusion | 5 mm |

| | | |
|---|---|---|
| * 40 000 ≤ Mn ≤ 45 000 | | |
| ** Shore D = 75, résistance au choc à - 55° C = 187 J/m mesurée selon ASTM D 256 | | |

Les résultats du test décrit plus haut montrent une meilleure aptitude à la déformation, et en particulier une amélioration à la flexion, des tubes flexibles sont gainés d'une couche intermédiaire d'élatomère interposée entre la carcasse proprement dite du flexible d'acier et la gaine externe de polymère rétractable (selon l'invention).

### Exemple 3

Autour d'un tube flexible d'acier de 32 mm de diamètre constitué de spires entre lesquelles se trouvent des creux et interstices permettant son articulation sont gainées par extrusions successives : une couche de polyester-polyuréthanne (ESTANE ® 58271) de 0,5 mm d'épaisseur à partir du sommet des spires, puis une couche de 5 mm d'épaisseur de polyfluorure de vinylidène (FORAFLON ® 1000 HD) ; (Echantillon 1). Le polyesterpolyuréthanne possède une dureté shore A de 88 et une diminution de viscosité de plus de 70 % en 30 jours à 120° C.

A titre comparatif est réalisé dans les mêmes conditions le même tube sans couche intermédiaire de polyuréthanne (Echantillon 2).

Les deux tubes sont comparés dans les conditions ci-après.

Le tube gainé est placé sur deux supports fixes. Au moyen d'un galet de cintrage de 75 mm de rayon, on appuie à équidistance des points d'appui du tube. Une pression de 50 bars est exercée. Le tube se cintre autour du galet. La hauteur d'enfoncement du galet indique l'aptitude à la déformation du tube flexible. La hauteur maximum est de 170 mm ; elle correspond à l'enroulement parfait du tube sur le rayon de courbure du galet. S'il y a rupture du flexible au cours de l'enfoncement, la hauteur est notée. Plus elle est élevée, plus le flexible est apte à la flexion.

| **Température** | **Hauteur d'enfoncement** | |
|---|---|---|
| | **Echantillon 1** | **Echantillon 2** |
| 20°C | 170 mm pas de rupture | 120 mm rupture |
| - 30° C | Rupture à 150 mm | Rupture à 80 mm |

### Exemple 4

Les échantillons 3 et 4 sont réalisés de la même façon que les échantillons 1 et 2, mais le polyfluorure de vinylidène est plastifié à 7,5 % en poids avec du N-butylbenzènesulfonamide.

L'échantillon 3 possède une couche intermédiaire de polyester-polyuréthanne de 1 mm d'épaisseur au-dessus des sommets des spires et une couche externe de 6 mm d'épaisseur de polyfluorure de vinylidène plastifié.

L'échantillon 4 ne possède pas de couche intermédiaire de polyester-polyuréthanne.

Des essais de cintrages successifs des tubes gainés sont effectués sur un mandrin de 68 mm de rayon. Entre chaque nouveau cintrage les tubes sont placés 1 heure à -10°C.

L'échantillon 3 a pu être cintré cinq fois sans rupture.

L'échantillon 4 blanchit après le quatrième cintrage et se fend au cinquième.

Des tubes échantillons 3 et 4 sont vieillis un mois à 150° C en étuve ventilée.

Le même essai de cintrage est ensuite réalisé à -10° C.

L'échantillon 3 blanchit au troisième cintrage et se casse au quatrième.

L'échantillon 4 se casse au premier cintrage.

## Revendications

1. Tube flexible à base de spires métalliques dont la surface orientée vers l'extérieur présente des interstices (5) entre spires cette surface étant recouverte d'une couche intermédiaire (8, 8A) en élastomère elle-même recouverte d'une gaine d'étanchéité extrudée obtenue à partir de polymère(s) rétractable(s) de préférence semi-cristallin(s), dans lequel la couche intermédiaire (8) se présente soit sous la forme d'une enveloppe tubulaire continue (8) soit sous la forme d'une bande (8A) disposée dans lesdits interstices (5) et en ce que l'élastomère éventuellement vulcanisé ou réticulé, et/ou thermoplastique élastomère (TPE) est en une quantité suffisante pour pénétrer dans chaque interstice de façon que le(s) polymère(s) rétractable(s) ne pénétre pas ou présente une profondeur de pénétration réduite dans les interstices entre spires, le remplissage par l'élastomère de l'espace libre délimité par chaque interstice étant pratiquement total ou représentant 25 à 75 % en volume de cet espace, l'association thermoplastique polyuréthanne (TPU) pour l'élastomère et polyvinylidène fluorure (PVDF) pour le polymère rétractable étant exclue.

2. Tube flexible selon la revendication 1, caractérisé en ce que l'élastomère présente une raideur inférieure à celle du polymère rétractable.

3. Tube flexible selon la revendication 1 ou 2, caractérisé en ce que l'élastomère est choisi parmi les élastomères silicones, événtuellement fluorés, et/ou les TPE à base polyamide et/ou les TPU et/ou les copolymères EPDM et/ou les copolymères acrylonitrile - butadiène - styrène et/ou les copolymères styrène - butadiène - styrène et/ou les copolymères méthylméthacrylate - butadiène - styrène et/ou les copolymères éthylène - oxyde de carbone et/ou les terpolymères éthylène - oxyde de carbone - vinyle acétate et/ou les caoutchoucs acryliques et/ou les TPO et/ou les TPE à base polyester et/ou les copolymères éthylène - éthylacrylate, éthylène - éthylacétate et éthylène - vinyle acétate ainsi que leurs terpolymères et/ou les élastomères fluorés.

4. Tube flexible selon l'une des revendications 1 à 3, caractérisé en ce que le(s) polymère(s) rétractable(s) sont choisis parmi :
- les polyoléfines,
- les polyamides,
- les polyuréthannes et polyurées,
- les polyesters,
- les polyéthers,
- les polyoxydes,
- les polysulfures (PPS) Parax,
- les polyéther-éther-cétones (PEEK) et leur copolymères,
- les polymères fluorés tels que
- les homo- et copolymères du fluorure de vinylidène (VF2),
- les homo- et copolymères du trifluoroéthylène (VF₃)
- les copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3, et avantageusement le PVDF et les copolymères ayant au moins 50 % en poids de motifs fluorure de vinylidène dans l'enchaînement polymérique, lesdits polymères rétractables pouvant être seuls en mélange avec d'autres polymères, lesdits polymères rétractables étant présents à raison d'au moins 70% en poids dans le mélange.

5. Procédé de fabrication d'un tube métallique flexible gainé selon l'une quelconque des revendications 1 à 4, caractérisé en ce qu'on extrude simultanément la couche intermédiaire d'élastomère et la gaine d'étanchéité de polymère rétractable sur le tube flexible.

6. Procédé de fabrication d'un tube métallique flexible gainé selon l'une quelconque des revendications 1 à 4, caractérisé en ce qu'on gaine dans un premier temps l'élastomère sur le tube flexible, par extrusion, enduction, pulvérisation, projection ou passage dans un bain liquide ou fluidisé, puis l'ensemble est ensuite revêtu d'une couche de polymère rétractable par extrusion.

7. Procédé de fabrication d'un tube métallique flexible gainé selon l'une quelconque des revendications 1 à 4, caractérisé en ce que l'élastomère est mis en place sur le tube flexible par rubanage tel que par enroulement hélicoïdal d'un jonc ou d'une bande continue, l'élastomère étant soit à l'état vulcanisé, soit thermoplastique.

8. Procédé de fabrication d'un tube métallique flexible gainé selon la revendication 7, caractérisé en ce que l'élastomère est mis en place sur le tube flexible sous forme d'enveloppe tubulaire continue en enroulant hélicoïdalement à bords jointifs une bande en élastomère.

9. Procédé de fabrication d'un tube métallique flexible gainé selon la revendication 7, caractérisé en ce que l'élastomère est mis en place sur le tube flexible sous forme de jonc disposé dans l'interstice (5).

10. Procédé de fabrication d'un tube métallique flexible gainé selon l'une quelconque des revendications 5 à 9, caractérisé en ce qu'on interpose un nappe de faible épaisseur contituée par l'enroulement en une ou plusieurs couches d'une bande, par exemple de tissu, de fibres, de matière plastique, éventuellement renforcée par des fibres, entre le tube métallique flexible (1) et la couche intermédiaire d'élastomère (8).

11. Procédé de fabrication d'un tube métallique flexible gainé selon la revendication 5, caractérisé en ce qu'on ajoute une certaine quantité de polymère rétractable à la couche intermédiaire élastomère et/ou ajoute une certaine quantité d'élastomère au polymère rétractable avant de les coextruder, ou en ce qu'on interpose, entre la couche intermédiaire d'élastomère et la gaine de polymère rétractable, une couche constituée d'un mélange d'élastomère et de polymère rétractable et coextrude le tricouche élastomère/élastomère+polymère rétractable/polymère rétractable.

12. Conduite tubulaire flexible comportant un tube gainé selon l'une quelconque des revendications 1 à 4, de préférence armée, utilisable pour le transport de fluides, notamment sous pression et/ou haute température.

13. Conduite tubulaire flexible selon la revendication 12 utilisable pour la production de pétrole et/ou de gaz off-shore.

## Claims

1. Flexible tube based on metal turns, the outwardly oriented surface of which has inter-turn interstices (5), this surface being covered with an interlayer (8, 8A) made of elastomer which is itself covered with an extruded sealing sheath obtained from shrinkable, preferably semicrystalline, polymer(s), in which the interlayer (8) is in the form of a continuous tubular envelope (8) or in the form of a tape (8A) placed in the said interstices (5) and in which the optionally cured or crosslinked elastomer and/or thermoplastic elastomer (TPE) are/is in a sufficient amount to penetrate each interstice so that the shrinkable polymer(s) does (do) not penetrate the inter-turn interstices or does (do) so with a small penetration depth, and the filling by the elastomer of the free space defined by each interstice being virtually complete or representing from 25 to 75% by volume of this space, the combination of a thermoplastic polyurethane (TPU), in the case of the elastomer, and of poly(vinylidene fluoride) (PVDF), in the case of the shrinkable polymer, being excluded.

2. Flexible tube according to Claim 1, characterized in that the elastomer has a stiffness less than that of the shrinkable polymer.

3. Flexible tube according to Claim 1 or 2, characterized in that the elastomer is chosen from silicone elastomers, optionally fluorosilicone elastomers, and/or polyamide-based TPEs and/or TPUs and/or EPDM copolymers and/or acrylonitrile-butadiene-styrene copolymers and/or styrene-butadiene-styrene copolymers and/or methyl methacrylate-butadiene-styrene copolymers and/or ethylene-carbon monoxide copolymers and/or ethylene-carbon monoxide-vinyl acetate terpolymers and/or acrylic rubbers and/or TPOs and/or polyester-based TPEs and/or ethylene-ethylacrylate, ethylene-ethyl acetate and ethylene-vinyl acetate copolymers, as well as their terpolymers, and/or fluoroelastomers.

4. Flexible tube according to one of Claims 1 to 3, characterized in that the shrinkable polymer(s) is (are) chosen from:
- polyolefins,
- polyamides,
- polyurethanes and polyureas,
- polyesters,
- polyethers,
- polyoxides,
- polysulfides (PPS) Parax,
- polyether-ether-ketones (PEEK) and their copolymers,
- fluoropolymers such as
- vinylidene fluoride (VF2) homopolymers and copolymers,
- trifluoroethylene (VF3) homopolymers and copolymers,
- copolymers, and especially terpolymers, combining residues of chlorotrifluoroethylene (CTFE), tetrafloroethylene (TFE), hexafluoropropylene (HFP) and/or ethylene units and, optionally, VF2 and/or VF3 units, and advantageously PVDF and copolymers having at least 50% by weight of vinylidene fluoride units in the polymeric chain, the said shrinkable polymers being able to be alone or in a blend with other polymers, and the said shrinkable polymers being present in an amount of at least 70% by weight in the blend.

5. Process for manufacturing a sheathed flexible metal tube according to any one of Claims 1 to 4, characterized in that the interlayer of elastomer and the sealing sheath of shrinkable polymer are extruded simultaneously over the flexible tube.

6. Process for manufacturing a sheathed flexible metal tube according to any one of Claims 1 to 4, characterized in that firstly the elastomer is put as a sheath over the flexible tube by extrusion, coating, spraying, or passage through a liquid or fluidized bath, and then the assembly is subsequently coated with a layer of shrinkable polymer by extrusion.

7. Process for manufacturing a sheathed flexible metal tube according to any one of Claims 1 to 4, characterized in that the elastomer is put into position on the flexible tube by taping, such as by helically winding a cord or a continuous tape, the elastomer being either in the cured state or thermoplastic.

8. Process for manufacturing a sheathed flexible metal tube according to Claim 7, characterized in that the elastomer is put into position on the flexible tube in the form of a continuous tubular envelope by helically winding an elastomer tape with touching edges.

9. Process for manufacturing a sheathed flexible metal tube according to Claim 7, characterized in that the elastomer is put into position on the flexible tube in the form of a cord placed in the interstice (5).

10. Process for manufacturing a sheathed flexible metal tube according to any one of Claims 5 to 9, characterized in that a thin ply formed by winding, into one or more layers, a tape, for example a fabric, fibre or plastic tape, optionally reinforced with fibres, is interposed between the flexible metal tube (1) and the elastomer interlayer (8).

11. Process for manufacturing a sheathed flexible metal tube according to Claim 5, characterized in that a certain amount of shrinkable polymer is added to the elastomer interlayer and/or a certain amount of elastomer is added to the shrinkable polymer before they are coextruded, or in that a layer consisting of a blend of elastomer and of shrinkable polymer is interposed between the elastomer interlayer and the shrinkable polymer sheath, and the elastomer/elastomer+shrinkable polymer/shrinkable polymer trilayer is coextruded.

12. Flexible tubular pipe comprising a sheathed tube according to any one of Claims 1 to 4, the pipe preferably being reinforced, and being able to be used for the transportation of fluids, especially pressurized and/or high-temperature fluids.

13. Flexible tubular pipe according to Claim 12, which can be used for off-shore oil and/or gas production.

## Patentansprüche

1. Flexibles Rohr auf der Basis von Metallwindungen, dessen nach außen gerichtete Oberfläche zwischen den Windungen Zwischenräume (5) aufweist, wobei die Oberfläche mit einer Zwischenschicht aus Elastomer (8, 8A) bedeckt ist, die wiederum mit einer extrudierten, abdichtenden Umhüllung bedeckt ist, die aus einem oder mehreren kontrahierbaren und vorzugsweise semikristallinen Polymeren hergestellt ist, wobei die Zwischenschicht (8) in Form einer kontinuierlichen röhrenförmigen Hülle oder in Form eines Bandes (8A)vorliegt, das in den Zwischenräumen (5) angeordnet ist, dadurch gekennzeichnet, daß das gegebenenfalls vulkanisierte oder vernetzte Elastomer und/oder thermoplastische Elastomer (TPE) in einer Menge vorliegt, die ausreichend ist um in jeden Zwischenraum so einzudringen, daß das (die) kontrahierbare(n) Polymer(e) nicht oder mit einer geringeren Eindringtiefe in die Zwischenräume der Windungen eindringt (eindringen), wobei der durch jeden Zwischenraum abgegrenzte freie Raum praktisch vollständig ausgefüllt wird oder 25 bis 75 Vol.-% des Raumes ausgefüllt werden, mit der Maßgabe, daß die Kombination von thermoplastischen Polyurethan (TPU) als Elastomer und Polyvinylidenfluorid (PVDF) als kontrahierbares Polymer ausgenommen ist.

2. Flexibles Rohr nach Anspruch 1, dadurch gekennzeichnet, daß das Elastomer eine geringere Steifigkeit als das kontrahierbare Polymer aufweist.

3. Flexibles Rohr nach Anspruch 1 oder 2, dadurch gekennzeichnet, daß das Elastomer unter den Siliconelastomeren, die gegebenenfalls fluoriert sind, und/oder den TPE auf Polyamidbasis und/oder den TPU und/oder den EPDM-Copolymeren und/oder den Acrylnitril-Butadien-Styrol-Copolymeren und/oder den Styrol-Butadien-Styrol-Copolymeren und/oder den Methylmethacrylat-Butadien-Styrol-Copolymeren und/oder den Ethylen-Kohlenoxid-Copolymeren und/oder den Ethylen-Kohlenoxid-Vinylacetat-Terpolymeren und/oder den Acrylkautschuken und/oder den TPO und/oder den TPE auf Poylesterbasis und/oder den Copolymeren Ethylen-Ethylacrylat, Ethylen-Ethylacetat und Ethylen-Vinylacetat sowie deren Terpolymeren und/oder den fluorierten Elastomeren ausgewählt ist.

4. Flexibles Rohr nach einem der Ansprüche 1 bis 3, dadurch gekennzeichnet, daß das (die) kontrahierbare(n) Polymer(e) ausgewählt sind unter:
- Polyolefinen,
- Polyamiden,
- Polyurethanen und Polyharnstoffen,
- Poylestern,
- Polyethern,
- Polyoxiden,
- Polysulfiden (PPS) Parax,
- Polyetheretherketonen (PEEK) und deren Copolymeren,
- fluorierten Polymeren, wie
- Homo- und Copolymere von Vinylidenfluorid (VF2),
- Homo- und Copolymere von Trifluorethylen (VF3),
- Copolymere und insbesondere Terpolymere, in denen Einheiten von Chlortrifluorethylen (CTFE), Tetrafluorethylen (TFE), Hexafluorpropen (HFP) und/oder Ethylen und gegebenenfalls Einheiten VF2 und/oder VF3 kombiniert sind,
und vorteilhaft PVDF und die Copolymere, die mindestens 50 Gew.-% Vinylidenfluorideinheiten in der Polymerkette aufweisen, wobei diese kontrahierbaren Polymere im Gemisch mit weiteren Polymeren vorliegen können und dann in dem Gemisch in Mengenanteilen von mindestens 70 Gew.-% vorliegen.

5. Verfahren zur Herstellung eines umhüllten flexiblen metallischen Rohrs nach einem der Ansprüche 1 bis 4, dadurch gekennzeichnet, daß die Zwischenschicht aus Elastomer und die abdichtende Umhüllung aus kontrahierbarem Polymer gleichzeitig auf das flexible Rohr extrudiert werden.

6. Verfahren zur Herstellung eines umhüllten flexiblen metallischen Rohrs nach einem der Ansprüche 1 bis 4, dadurch gekennzeichnet, daß in einem ersten Schritt das flexible Rohr durch Extrusion, Streichbeschichten, Sprühen, Aufspritzen oder Ziehen durch ein flüssiges oder fließfähiges Bad mit dem Elastomer ummantelt wird und dann das Ganze durch Extrudieren mit einer Schicht aus kontrahierbarem Polymer überzogen wird.

7. Verfahren zur Herstellung eines umhüllten flexiblen metallischen Rohrs nach einem der Ansprüche 1 bis 4, dadurch gekennzeichnet, daß das Elastomer durch Bewicklung, beispielsweise schraubenförmiges Wickeln eines Stranges oder eines kontinuierlichen Bandes, auf das flexible Rohr aufgebracht wird, wobei das Elastomer vulkanisiert oder thermoplastisch vorliegt.

8. Verfahren zur Herstellung eines umhüllten flexiblen metallischen Rohrs nach Anspruch 7, dadurch gekennzeichnet, daß das Elastomer auf das flexible Rohr in Form einer kontinuierlichen röhrenförmigen Hülle aufgebracht wird, indem ein Elastomerband ohne Zwischenraum schraubenförmig aufgewickelt wird.

9. Verfahren zur Herstellung eines umhüllten flexiblen metallischen Rohrs nach Anspruch 7, dadurch gekennzeichnet, daß das Elastomer auf das flexible Rohr in Form eines Stranges aufgebracht wird, der in dem Zwischenraum (5) angeordnet ist.

10. Verfahren zur Herstellung eines umhüllten flexiblen metallischen Rohrs nach einem der Ansprüche 5 bis 9, dadurch gekennzeichnet, daß zwischen dem flexiblen metallischen Rohr (1) und der Zwischenschicht aus Elastomer (8) eine Lage von geringer Dicke durch Wickeln eines Bandes, beispielsweise aus Gewebe, Fasern oder Kunststoff, der gegebenenfalls mit Fasern verstärkt ist, in einer oder mehreren Schichten vorgesehen wird.

11. Verfahren zur Herstellung eines umhüllten flexiblen metallischen Rohrs nach Ansprach 5, dadurch gekennzeichnet, daß in die Zwischenschicht aus Elastomer eine bestimmte Menge des kontrahierbaren Polymers und/oder in das kontrahierbare Polymer eine bestimmte Menge Elastomer eingearbeitet wird, bevor sie coextrudiert werden, oder dadurch, daß zwischen der Zwischenschicht aus Elastomer und der Umhüllung aus kontrahierbarem Polymer eine Schicht vorgesehen ist die aus einem Gemisch von Elastomer und kontrahierbarem Polymer besteht, und die Dreifachbeschichtung Elastomer/Elastomer + kontrahierbares Polymer / kontrahierbares Polymer coextrudiert wird.

12. Flexible Rohrleitung, die ein umhülltes Rohr nach einem der Ansprüche 1 bis 4 enthält, die vorzugsweise verstärkt ist und zum Transport von Fluiden, insbesondere unter Druck und/oder bei hoher Temperatur verwendbar ist.

13. Flexible Rohrleitung nach Anspruch 12, die zur Gewinnung von Erdöl und/oder Gas off-shore verwendbar ist.
